(19) Europäisches Patentamt
European Patent Office
Office européen des brevets

(11) **EP 4 163 236 A1**

(12) **EUROPÄISCHE PATENTANMELDUNG**

(43) Veröffentlichungstag:
**12.04.2023 Patentblatt 2023/15**

(21) Anmeldenummer: **21306425.6**

(22) Anmeldetag: **11.10.2021**

(51) Internationale Patentklassifikation (IPC):
**B65G 54/02** (2006.01)     **H02K 41/03** (2006.01)
**B60L 13/03** (2006.01)

(52) Gemeinsame Patentklassifikation (CPC):
**B65G 54/02; B60L 13/03; H02K 41/031**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Schneider Electric Industries SAS**
**92500 Rueil-Malmaison (FR)**

(72) Erfinder: **VOLK, Reiner**
**97264 Helmstadt (DE)**

(74) Vertreter: **Manitz Finsterwald**
**Patent- und Rechtsanwaltspartnerschaft mbB**
**Martin-Greif-Strasse 1**
**80336 München (DE)**

(54) **LINEARMOTORSYSTEM**

(57)     Die vorliegende Erfindung betrifft ein Linearmotorsystem, insbesondere Transportsystem, zum Beispiel Multi-Carrier-System, das eine Führungsbahn mit einer Mehrzahl von entlang der Führungsbahn verteilt angeordneten Elektromagneten umfasst. Das Linearmotorsystem umfasst außerdem einen ersten und zweiten Läufer, die von der Führungsbahn geführt und entlang dieser bewegbar sind und jeweils einen Antriebsmagneten zum Zusammenwirken mit den Elektromagneten der Führungsbahn zum Bewegen der Läufer umfassen, und eine Steuerungseinrichtung zur Steuerung der Bewegung der Läufer relativ zur Führungsbahn durch entsprechende Ansteuerung der Elektromagneten. Zudem umfasst das Linearmotorsystem zumindest ein an dem ersten und/oder zweiten Läufer befestigtes Energieübertragungselement, das dazu ausgebildet ist, Energie von dem ersten Läufer an den zweiten Läufer zu übertragen.

EP 4 163 236 A1

**Beschreibung**

Die vorliegende Erfindung betrifft ein Linearmotorsystem, insbesondere Transportsystem, zum Beispiel Multi-Carrier-System, umfassend: eine Führungsbahn mit einer Mehrzahl von entlang der Führungsbahn verteilt angeordneten Elektromagneten; einen ersten und zweiten Läufer, die von der Führungsbahn geführt und entlang dieser bewegbar sind und jeweils einen Antriebsmagneten zum Zusammenwirken mit den Elektromagneten der Führungsbahn zum Bewegen der Läufer umfassen; und eine Steuerungseinrichtung zur Steuerung der Bewegung der Läufer relativ zur Führungsbahn durch entsprechende Ansteuerung der Elektromagneten. Die Erfindung betrifft auch ein Verfahren zum Betreiben eines solchen Systems und einen Läufer für ein solches System.

Linearmotoren sind heute weit verbreitet. Sie können zum Beispiel dazu eingesetzt werden, Produkte in Industrieanlagen zu bewegen, insbesondere zu transportieren. Zum flexiblen Transport von verschiedenen Produkten sind Multi-Carrier besonders vorteilhaft. Diese umfassen insbesondere eine Mehrzahl an Läufern, also Transporteinheiten, die einzeln und unabhängig voneinander bewegbar sind. In einem typischen Multi-Carrier-System ist die Führungsbahn in sich geschlossen, also praktisch endlos, was einen Umlaufbetrieb ermöglicht.

Bei industriellen Anlagen werden oftmals Verarbeitungsschritte an den durch die Läufer transportierten Produkten durch externe Systeme oder Menschen an vordefinierten Positionen entlang der Führungsbahn (d.h. an "Stationen") durchgeführt. Hierfür wird typischerweise ein erster Läufer beim Annähern an die definierte Position abgebremst, während ein zweiter Läufer, an dem ein Verarbeitungsschritt bereits durchgeführt wurde, beschleunigt wird, um diesen von der definierten Position wegzubewegen. Die für das Bremsen des ersten Läufers und die Beschleunigung des zweiten Läufers benötigte Energie bzw. der benötigte Strom führt zu einem signifikanten Energie- bzw. Stromverbrauch sowie zu hohen Leistungsanforderungen an das System. Dies gilt insbesondere, wenn die definierten Positionen mit hoher Taktzahl angefahren werden soll, d.h. wenn pro Zeiteinheit sehr viele Läufer gebremst und/oder beschleunigt werden müssen.

Es ist eine Aufgabe der Erfindung, die Effizienz des Linearmotorsystems der eingangs genannten Art zu optimieren und/oder die Leistungsanforderungen an das Linearmotorsystem zu reduzieren.

Diese Aufgabe wird durch ein Linearmotorsystem gemäß Anspruch 1 gelöst, und insbesondere dadurch, dass zumindest ein Energieübertragungselement an dem ersten und/oder zweiten Läufer befestigt ist und dazu ausgebildet ist, Energie von dem ersten Läufer an den zweiten Läufer zu übertragen.

Die Erfindung betrifft ein Linearmotorsystem, insbesondere ein Transportsystem, zum Beispiel ein Multi-Carrier-System, umfassend:

- eine Führungsbahn mit einer Mehrzahl von entlang der Führungsbahn verteilt angeordneten Elektromagneten;
- einen ersten und zweiten Läufer, die von der Führungsbahn geführt und entlang dieser bewegbar sind und jeweils einen Antriebsmagneten zum Zusammenwirken mit den Elektromagneten der Führungsbahn zum Bewegen der Läufer umfassen;
- eine Steuerungseinrichtung zur Steuerung der Bewegung der Läufer relativ zur Führungsbahn durch entsprechende Ansteuerung der Elektromagneten; und
- zumindest ein an dem ersten und/oder zweiten Läufer befestigtes Energieübertragungselement, das dazu ausgebildet ist, Energie von dem ersten Läufer an den zweiten Läufer zu übertragen.

Die Erfindung nutzt also die (kinetische) Energie des ersten Läufers, der sich entlang der Führungsbahn bewegt, um den zweiten Läufer zu beschleunigen. Die Energie und insbesondere die kinetische Energie des ersten Läufers wird dabei über das Energieübertragungselement zumindest teilweise an den zweiten Läufer übertragen. Wenn der erste, abbremsende bzw. abzubremsende Läufer einen vorbestimmten Mindestabstand zu dem zweiten, beschleunigenden bzw. zu beschleunigenden Läufer unterschreitet, kann das Energieübertragungselement z.B. eine temporäre mechanische Verbindung zwischen den Läufern herstellen, wobei Energie des ersten Läufers an den zweiten Läufer zumindest teilweise durch das Energieübertragungselement übertragen wird, d.h. der erste Läufer wird abgebremst und der zweite Läufer beschleunigt. Beispielsweise kann durch das Energieübertragungselement mehr als 20 %, 30 %, 50 % oder 70 % der, insbesondere kinetischen, Energie des ersten Läufers an den zweiten Läufer übertragen werden.

Insbesondere kann eine unmittelbare und/oder mittelbare Übertragung der kinetischen Energie erfolgen. Grundsätzlich weist der erste Läufer kinetische Energie auf, da der erste Läufer mit einer bestimmten Geschwindigkeit über die Führungsbahn fährt, während sich der zweite Läufer in einer Ruheposition befindet oder sich mit einer geringeren Geschwindigkeit als der erste Läufer entlang der Führungsbahn bewegt. Sobald der erste Läufer einen vorbestimmten Mindestabstand zum zweiten Läufer unterschreitet, erfolgt eine zumindest teilweise direkte Energieübertragung der kinetischen Energie von dem ersten Läufer an den zweiten Läufer und/oder eine zumindest teilweise Speicherung der kinetischen Energie des ersten Läufers durch das Energieübertragungselement in Form von potentieller Energie (z.B. durch Spannen eines Energieübertragungselements, welches als Feder ausgebildet ist) sowie eine anschließende Umwandlung der gespeicherten potentiellen Energie in kinetische Energie in Form einer Beschleunigung des zweiten Läufers. Insbesondere wird der erste Läufer bei der Übertragung der Energie abgebremst.

Grundsätzlich kann das Energieübertragungselement an dem ersten und/oder dem zweiten Läufer befestigt sein, wobei das an dem jeweiligen Läufer befestigte Energieübertragungselement stets in Richtung des wechselwirkenden Läufers und/oder in Fahrtrichtung des Läufers gerichtet sein kann. Grundsätzlich ist es auch möglich, dass eine Vielzahl von Energieübertragungselementen an dem ersten und/oder zweiten Läufer befestigt sind. Dies kann zu einer Verstärkung des beschriebenen Effekts führen, sodass der Wirkungsgrad der Energieübertragung erhöht wird.

Als Folge der Energieübertragung durch das Energieübertragungselement kann ein für das Bremsen des ersten Läufers bzw. für die Beschleunigung des zweiten Läufers benötigter Strom reduziert werden, sodass sowohl der Stromverbrauch als auch die Leistungsanforderungen an das System reduziert werden.

Weitbildungen der Erfindung sind der Beschreibung, den Zeichnungen sowie den abhängigen Ansprüchen zu entnehmen.

Gemäß einer ersten Ausführungsform ist das Energieübertragungselement dazu ausgebildet, bei einem Eintritt des ersten und/oder des zweiten Läufers in einen Wirkbereich des Energieübertragungselements die Energie von dem ersten Läufer an den zweiten Läufer zu übertragen. Der Wirkbereich kann einen Bereich definieren, in dem das Energieübertragungselement Energie speichert und/oder überträgt. Wenn der erste Läufer den vorbestimmten Mindestabstand zum zweiten Läufer unterschreitet, kann dies den Eintritt in den Wirkbereich definieren. Beispielsweise kann der Eintritt in den Wirkbereich bedeuten, dass einer der beiden Läufer in direkten Kontakt mit dem Energieübertragungselement kommt, d.h. das Energieübertragungselement direkt berührt. Über den Zeitraum, in dem ein Läufer mit dem Energieübertragungselement in direktem Kontakt steht, kann das Energieübertragungselement die Energie und insbesondere die kinetische Energie des ersten Läufers zumindest teilweise speichern und/oder an den zweiten Läufer übertragen. Ab dem Zeitpunkt, in dem der jeweilige Läufer und das Energieübertragungselement nicht mehr in Kontakt stehen, kann die Energie des ersten Läufers und/oder die in dem Energieübertragungselement gespeicherte Energie vollständig oder zumindest teilweise an den zweiten Läufer übertragen worden sein, sodass im Energieübertragungselement keine oder nahezu keine Energie mehr gespeichert ist. Alternativ kann die Energieübertragung auch ohne ein direktes Berühren eines Läufers mit dem Energieübertragungselement erfolgen. Beispielsweise kann hierfür das Energieübertragungselement ausgebildet sein, dass sich bei einem Eintritt des ersten Läufers in den Wirkbereich des Energieübertragungselements des ersten und/oder zweiten Läufers die Läufer voneinander abstoßen und somit der erste Läufer abgebremst wird, während der zweite Läufer beschleunigt wird. Dabei kann das Energieübertragungselement beispielsweise als Magnet ausgebildet sein, wobei sich die beiden Energieübertragungselemente des ersten und zweiten Läufers im Wirkbereich bevorzugt abstoßen.

Bevorzugt umfasst das Linearmotorsystem eine Informationsrückführungseinrichtung zur Rückführung wenigstens einer Rückführungsinformation an die Steuerungseinrichtung betreffend die Bewegung des Läufers und/oder die Aktivität der Elektromagneten während einer Bewegung des Läufers, wobei die Steuerungseinrichtung dazu eingerichtet ist, die Bewegung des Läufers, insbesondere auf Basis der Rückführungsinformation, zu regeln. Rückführungsinformationen können beispielsweise Informationen über die Position, Geschwindigkeit, Beschleunigung, Energie eines Läufers, den für die Bewegung des Läufers eingesetzten Strom sein oder jede andere Information über die Bewegung des Läufers oder der Läufer sein. Typischerweise werden die Rückführungsinformationen über Sensoren, durch Berechnungen oder auf andere Art und Weise erfasst. Grundsätzlich wird für die Regelung der Bewegung des Läufers ein Ist-Wert von beispielsweise der Beschleunigung des Läufers mit einem vorgegebenen Soll-Wert iterativ abgeglichen und die Abweichung von Ist- und Soll-Wert durch die Regelung minimiert.

Gemäß einer weiteren Ausführungsform ist die auf die Steuerungseinrichtung zurückzuführende Beschleunigung des zweiten Läufers zumindest im Wirkbereich nicht negativ und/oder weicht maximal 15 % oder 10% von der auf das Energieübertragungselement zurückzuführenden Beschleunigung ab, wobei eine negative Beschleunigung beispielsweise einem Bremsen entspricht. Mit anderen Worten hat die durch die Steuerungseinrichtung und insbesondere durch die Ansteuerung der Elektromagneten auf den zweiten Läufer wirkende Beschleunigung (d.h. die Beschleunigung, die auftreten würde, wenn nur die durch die Elektromagneten verursachte und durch die Steuerungseinrichtung 17 gesteuerte Beschleunigung berücksichtigt würde) zumindest keine abbremsende Wirkung und/oder weicht maximal 15% oder 10% von der durch das Energieübertragungselement auf den zweiten Läufer wirkenden Beschleunigung (d. h. die auftreten würde, wenn nur die Feder bei der Beschleunigung berücksichtigt würde) ab.

Die Bewegungssteuerung des zweiten Läufers durch die Steuerungseinrichtung hat somit einen unterstützenden Effekt auf die durch das Energieübertragungselement bewirkte Beschleunigungskurve des zweiten Läufers. Es ist bevorzugt, dass die durch die Steuerungseinrichtung durchgeführte Steuerung der Bewegung des zweiten Läufers nicht entgegengesetzt zu oder stark abweichend von der durch das Energieübertragungselement hervorgerufenen Beschleunigungskurve arbeitet, d.h. die auf das Energieübertragungselement zurückzuführende Beschleunigung nicht abschwächt. Es erfolgt also kein (unbeabsichtigtes) Bremsen durch die Regelkreise der Steuerungseinrichtung. Ermittelt die Steuerungseinrichtung beispielsweise durch die Positionsinformation des ersten und zweiten Läufers, dass der vorbestimmte Mindestabstand zwischen dem ersten und zweiten Läufer unterschritten wird und somit der erste und/oder zweite Läufer in den Wirkbereich eingetreten ist, so bremst die Steuerungseinrichtung den zweiten Läufer nicht ab, zumindest solange er sich im Wirkbereich befindet. Insbesondere vergleicht die Steuerungseinrichtung einen Soll-Beschleunigungswert des zweiten Läufers mit einem Ist-Beschleunigungswert des zweiten Läufers und passt diesen durch eine entsprechende Ansteuerung der Elektromagneten so an, dass eine Differenz zwischen Soll- und Ist-Wert minimiert wird.

Gemäß einer weiteren Ausführungsform ist die Steuerungseinrichtung dazu eingerichtet, die Steuerung der Bewegung des zweiten Läufers an eine durch das Energieübertragungselement bewirkte Beschleunigungskurve des zweiten Läufers anzupassen. Wie oben beschrieben, kann die Steuerung der Bewegung des zweiten Läufers so angepasst werden, dass sie maximal 15 % oder 10 % von der auf das Energieübertragungselement zurückzuführenden Beschleunigung abweicht. Bevorzugt entspricht die auf die Steuerungseinrichtung zurückzuführende Beschleunigungskurve der auf das Energieübertragungselement zurückzuführenden Beschleunigungskurve oder nähert die auf das Energieübertragungselement zurückzuführende Beschleunigungskurve zumindest an. Mit anderen Worten agiert die Steuerungseinrichtung so, dass der Wirkungsgrad der Energieübertragung durch das Energieübertragungselement erhöht oder zumindest nicht gesenkt wird. Die durch die Steuerungseinrichtung durchgeführte Steuerung der Bewegung des zweiten Läufers unterstützt und/oder verstärkt somit die durch das Energieübertragungselement bewirkte Beschleunigung des zweiten Läufers.

Beispielsweise kann die auf das Energieübertragungselement zurückzuführende Beschleunigungskurve vorab bestimmt oder berechnet werden, sodass eine Anpassung der Steuerung an die auf das Energieübertragungselement zurückzuführende Beschleunigungskurve vorgenommen werden kann. Die auf das Energieübertragungselement zurückzuführende Beschleunigungskurve ist insbesondere von den Eigenschaften des Energieübertragungselements abhängig. Abhängig von den Eigenschaften des Energieübertragungselements kann daher auch die Steuerung der Bewegung des zweiten Läufers angepasst werden. Insbesondere ist auch die Steuerung der Bewegung des ersten, abbremsenden Läufers an die auf das Energieübertragungselement zurückzuführende Bremskurve des ersten Läufers anpassbar. Die entsprechenden vorstehenden und nachstehenden Ausführungen zum Zusammenwirken zwischen Steuerung und der auf das Energieübertragungselement zurückzuführenden Beschleunigung des zweiten Läufers gelten in gleicher Weise für das Zusammenwirken der Steuerung mit der auf das Energieübertragungselement zurückzuführenden Bremsung des ersten Läufers.

Insbesondere weist die auf das Energieübertragungselement zurückzuführende Beschleunigungskurve des zweiten Läufers einen etwa sinusförmigen Verlauf auf, d.h. sobald der erste und/oder zweite Läufer in den Wirkbereich eintritt, steigt durch die Energieübertragung die Beschleunigung des zweiten Läufers bis zu einem Maximalbeschleunigungswert (Scheitelpunkt) stark an und sinkt nach Erreichen des Maximalbeschleunigungswerts ab. Insbesondere erreicht der zweite Läufer den Maximalbeschleunigungswert, wenn die Federauslenkung maximal ist.

Gemäß einer weiteren Ausführungsform ist die Steuerungseinrichtung dazu eingerichtet, die Steuerung der Bewegung des zweiten Läufers so einzustellen, dass eine etwa dreiecksförmige oder trapezförmige Beschleunigungskurve durch die Steuerung erreicht (d.h. gesteuert) wird. Insbesondere ist der Ruck, d.h. die momentane zeitliche Änderungsrate der Beschleunigung, des zweiten Läufers konstant. Um die auf das Energieübertragungselement zurückzuführende sinusförmige Beschleunigungskurve möglichst genau mithilfe der Steuerung abzubilden, ist die Steuerungseinrichtung dazu eingerichtet, die Bewegung des zweiten Läufers mittels einer etwa dreiecksförmigen oder trapezförmigen Beschleunigungskurve zu steuern. Grundsätzlich kann die auf die Steuerungseinrichtung zurückzuführende Beschleunigungskurve des zweiten Läufers jede beliebige Form annehmen und bevorzugt eine Form, welche die auf das Energieübertragungselement zurückzuführende Beschleunigungskurve annähert. Insbesondere ist es auch vorstellbar, dass der Ruck des zweiten Läufers nicht konstant ist, wobei auch in einem solchen Fall die auf die Steuerung zurückzuführende Beschleunigungskurve und die auf das Energieübertragungselement zurückzuführende Beschleunigungskurve des zweiten Läufers nahezu identisch sein können.

Gemäß einer weiteren Ausführungsform wird mittels eines Iterationsverfahrens ein optimaler Startabstand $d_{opt}$ zwischen dem zweiten Läufer und dem ersten Läufer ermittelt, wobei das Iterationsverfahren umfasst, dass:

(1) ein erster Startabstand $d_1$ zwischen dem ersten und zweiten Läufer festgelegt wird, bei dem sich eine erste minimale Distanz $d_{min,1}$ zwischen den Läufern ergibt, die kleiner ist als eine optimale minimale Distanz $d_{min,opt}$ , wobei der Startabstand eine Distanz zwischen dem ersten und zweiten Läufer definiert, bei dessen Unterschreitung der erste Läufer beginnt zu bremsen und der zweite Läufer beginnt zu beschleunigen;

(2) ein zweiter Startabstand $d_2$ zwischen dem ersten und zweiten Läufer festgelegt wird, bei dem sich eine zweite minimale Distanz $d_{min,2}$ ergibt, die größer ist als eine optimale minimale Distanz $d_{min,opt}$,

$$d_3 = \frac{d_1 + d_2}{2}$$

(3) ein dritter Startabstand berechnet und eine entsprechende dritte minimale Distanz $d_{min,3}$ ermittelt wird;

(4) $d_1$ und $d_2$ wie folgt aktualisiert werden:

$$d_1 := d_1 \quad \text{und}$$
$$d_2 := d_3, \quad \text{Wenn } (d_{min,1} - d_{min,opt}) \cdot (d_{min,3} - d_{min,opt}) < 0; \text{ oder}$$
$$d_1 := d_3 \quad \text{und}$$
$$d_2 := d_2, \quad \text{Wenn } (d_{min,2} - d_{min,opt}) \cdot (d_{min,3} - d_{min,opt}) < 0.$$

(5) die Schritte (3) und (4) wiederholt werden, wenn $d_{min,2} - d_{min,opt} >$ epsilon ist und $d_3$ ungleich 0 ist;
(6) sich der optimale Startabstand $d_{opt}$ wie folgt ergibt:

$$d_{opt} = d2 \quad \text{oder}$$
$$d_{opt} = d3, \quad \text{wenn } d_{min,3} - d_{min,opt} = 0.$$

Der optimale Startabstand $d_{opt}$ entspricht insbesondere einem Abstand zwischen dem ersten und zweiten Läufer, welcher der Größe des Wirkbereichs entspricht. Wenn beispielsweise der erste Läufer eine festgelegte Distanz zum zweiten Läufer unterschreitet (z.B. in den Wirkbereich eintritt), startet der zweite Läufer zu beschleunigen bzw. wird der zweite Läufer durch die Ansteuerung der Elektromagneten durch die Steuerungseinrichtung beschleunigt. Ferner ist die minimale Distanz zwischen zwei Läufern definiert als die minimale Distanz zwischen zwei Läufern während eines Brems- und Beschleunigungsvorgangs des ersten und zweiten Läufers bzw. während sich die beiden Läufer im Wirkbereich befinden. Dementsprechend ist die minimale Distanz $d_{min,1}$ definiert als die minimale Distanz für einen Brems- und Beschleunigungsvorgang des ersten und zweiten Läufers mit einem Startabstand von $d_1$. Entsprechend sind auch die minimalen Distanzen $d_{min,2}$, $d_{min,3}$ und $d_{min,opt}$ zu verstehen. Die minimale Distanz zwischen dem ersten und zweiten Läufer, welche bei Unterschreitung zu einer ineffizienten Energieübertragung und/oder einer Kollision und damit zu einem mechanischen Schock und somit zu Schäden an dem ersten und/oder zweiten Läufer und/oder am Energieübertragungselement führen kann, ist bevorzugt größer oder im Idealfall gleich der minimalen Distanz der beiden Läufer bei maximaler Federauslenkung (bei einem als Feder ausgebildeten Energieübertragungselement) oder bei der geringsten Ausdehnung des Energieübertragungselements. Beispielsweise kann die minimale Distanz bei maximaler Federauslenkung vorgegeben sein, bestimmt oder berechnet werden.

Mittels des Iterationsverfahrens wird der erste Startabstand $d_1$ zwischen dem ersten und zweiten Läufer festgelegt, bei dem sich die erste minimale Distanz $d_{min,1}$ zwischen den Läufern (bei maximaler Federauslenkung) ergibt, die kleiner ist als die optimale minimale Distanz $d_{min,opt}$ (bei maximaler Federauslenkung), wobei $d_{min,opt}$ die minimale Distanz zwischen zwei Läufern darstellt, bei der ein maximaler Energieaustausch zwischen den Läufern realisiert wird. Der erste Startabstand $d_1$ kann beispielsweise mittels empirischer Daten, durch Versuche oder basierend auf Berechnungen ermittelt werden. Insbesondere kann der Startabstand $d_1$ mittels einer simulierten und/oder realen Durchführung von Brems- und Beschleunigungsvorgängen des ersten und zweiten Läufers ermittelt werden. Beispielsweise können bei einer simulierten Durchführung die entsprechenden Parameter, insbesondere $d_1$, vorab einstellt werden und der resultierende Wert für $d_{min,1}$ ausgelesen werden. Bei einer realen Durchführung kann die Steuerung entsprechend angepasst werden, sodass der erste Läufer beginnt zu bremsen bzw. der zweite Läufer beginnt zu beschleunigen, sobald ein Unterschreiten einer Distanz $d_1$ zwischen dem ersten Läufer und dem zweiten Läufer beispielsweise über Positionssensoren oder mittels Berechnungen detektiert wird. Der sich ergebende minimale Abstand $d_{min,1}$ kann ebenfalls mittels Positionssensoren bestimmt werden. Die simulierten und/oder realen Brems- und Beschleunigungsvorgänge können solange durchgeführt werden bis ein erster Startabstand $d_1$ ermittelt wird, welcher die obig genannte Bedingung erfüllt. Die optimale minimale Distanz $d_{min,opt}$ (bei maximaler Federauslenkung) kann vorab bekannt sein, bestimmt oder berechnet werden. Beispielsweise kann die optimale minimale Distanz basierend auf den Eigenschaften und Kennwerten des Energieübertragungselements vorgegeben sein oder bestimmt werden.

Der Bestimmung des ersten Startabstands $d_1$ entsprechend kann auch der zweite Startabstand $d_2$ mit den beschriebenen Methoden bestimmt werden, wobei die zweite minimale Distanz $d_{min,2}$ (bei maximaler Federauslenkung) größer ist als eine optimale minimale Distanz $d_{min,opt}$ (bei maximaler Federauslenkung).

Durch diese Wahl von $d_1$ und $d_2$ wird sichergestellt, dass $d_{opt}$ in dem Intervall $[d_1, d_2]$ liegt. $d_{opt}$ liegt genau dann in dem Intervall $[d_1, d_2]$, wenn die Differenzen $(d_{min,1} - d_{min,opt})$ und $(d_{min,2} - d_{min,opt})$ ein Vorzeichenwechsel aufweisen bzw. wenn die Bedingung $(d_{min,1} - d_{min,opt}) \cdot (d_{min,2} - d_{min,opt}) < 0$ erfüllt ist. Für die Ermittlung des optimalen Startabstands $d_{opt}$ wird eine Intervallschachtelungsverfahren angewendet. Hierfür wird das Intervall $[d_1, d_2]$, in dem sich $d_{opt}$ befindet, halbiert. Die entstehenden zwei Intervalle ergeben sich zu $[d_1, d_3]$ und $[d_3, d_2]$, wobei $d_3 = \dfrac{d1 + d2}{2}$ gilt. Um zu überprüfen, in welchem der entstandenen Intervalle $d_{opt}$ liegt, wird $d_{min,3}$ beispielsweise mittels einer simulierten und/oder realen Durchführung von Brems- und Beschleunigungsvorgängen der beiden Läufer ermittelt, indem zumindest ein Brems- und Beschleunigungsvorgang der beiden Läufer mit dem Startabstand $d_3$ durchgeführt wird. Alternativ kann $d_{min,3}$ basierend auf empirischen Daten beispielsweise aus einer Tabelle abgelesen werden. Abhängig davon, für welches Intervall ein Vorzeichenwechsel der Differenzen $d_{min,1}$ - $d_{min,opt}$ und $d_{min,3}$ - $d_{min,opt}$ (Fall 1) bzw. $d_{min,3}$ - $d_{min,opt}$ und $d_{min,2}$ - $d_{min,opt}$ (Fall 2) vorliegt, wird bestimmt, in welchem Intervall $d_{opt}$ liegt. Ist die Bedingung $d_{min,1}$ - $d_{min,opt} \cdot d_{min,3}$ - $d_{min,opt} < 0$ (Fall 1) erfüllt, so liegt $d_{opt}$ in dem Intervall $[d_1, d_3]$, während bei Erfüllung der Bedingung $(d_{min,2}$ - $d_{min,opt}) \cdot (d_{min,3}$ - $d_{min,opt}) < 0$ (Fall 2) $d_{opt}$ in dem Intervall $[d_3, d_2]$ liegt. Folglich wird das neue Intervall, in dem nach $d_{opt}$ gesucht wird, aktualisiert, sodass sich für die Intervallgrenzen $d_1$ und $d_2$ folgende Aktualisierung ergibt:

Für Fall 1: $d_1 := d_1$ und $d_2 := d_3$ und

Für Fall 2: $d_1 := d_3$ und $d_2 := d_2$.

Anschließend wird die Intervallschachtelung so lange wiederholt bis ein Startabstand $d_2$ ermittelt wird, für den die Bedingung $\Delta d_{min} = d_{min,2} - d_{min,opt} < epsilon$ erfüllt ist, wobei epsilon ein vorbestimmter Wert ist, beispielsweise 2 cm, 1 cm oder 0,5 cm. Der optimale Startabstand ergibt sich dann zu $d_{opt} = d_2$. Alternativ kann auch der Startabstand $d_1$, für den die Bedingung $\Delta d_{min} = d_{min,1} - d_{min,opt} < epsilon$ erfüllt ist, als optimaler Startabstand $d_{opt} = d_1$ verwendet werden. Ein Sonderfall ergibt sich, wenn $d_{min,3} = d_{min,opt}$ ist. In einem solchen Fall kann das Iterationsverfahren abgebrochen werden, da in diesem Szenario der exakte optimale Startabstand $d_{opt} = d_3$ ist.

Gemäß einer weiteren Ausführungsform umfasst das Energieübertragungselement eine Feder. Insbesondere speichert die Feder zumindest einen Teil der kinetischen Energie des ersten Läufers im gestauchten Zustand als potentielle Energie $E_{pot}$ und wandelt die gespeicherte potentielle Energie $E_{pot}$ bei der Übertragung an den zweiten Läufer durch eine Streckung in kinetische Energie um. Unter der Annahme, dass die beiden Läufer eine gleiche Masse aufweisen und unter Vernachlässigung der Reibung kann die in der Feder gespeicherte potentielle Energie $E_{pot}$ bei maximaler Federauslenkung wie folgt bestimmt werden:

Gleichung (1) veranschaulicht die kinetische Energie des ersten Läufers $E_{kin,start}$ kurz bevor oder zu Beginn der Energieübertragung:

$$E_{kin,start} = \frac{m}{2} \cdot v_{start}^2$$

wobei $v_{start}$ die Geschwindigkeit des ersten Läufers kurz bevor oder zu Beginn der Energieübertragung ist, wenn die Federauslenkung gleich Null ist, und $E_{kin,start}$ die kinetische Energie des ersten Läufers darstellt.

Für den Fall, dass die negative Beschleunigung des zu bremsenden Läufers den gleichen Betrag hat wie die positive Beschleunigung des zu beschleunigenden Läufers und der Brems- und Beschleunigungsvorgang genau in dem Moment starten, wenn die Distanz zwischen dem ersten und zweiten Läufer dem Wirkbereich der Feder entspricht (optimale Bedingung), so kann die dem ersten Läufer und zweiten Läufer zugehörige kinetische Energie zum Zeitpunkt der maximalen Federauslenkung wie folgt berechnet werden:

$$v_{L1} = v_{L2} = \frac{v_{start}}{2}$$

$$m = m_{L1} = m_{L2}$$

$$E_{kin,gesamt} = E_{kin,L1} + E_{kin,L2} = \frac{m}{2} \cdot \frac{v_{start}^2}{2} + \frac{m}{2} \cdot \frac{v_{start}^2}{2} = \frac{m}{4} \cdot v_{start}^2$$

wobei $v_{L1}$ bzw. $v_{L2}$ die Geschwindigkeit des ersten Läufers bzw. des zweiten Läufers, $m_{L1}$ bzw. $m_{L1}$ die Masse des ersten bzw. des zweiten Läufers und $E_{kin,gesamt}$ die gesamte kinetische Energie der Läufer einschließlich der kinetischen Energie des ersten Läufers $E_{kin,L1}$ und der kinetischen Energie des zweiten Läufers $E_{kin,L2}$ im Zeitpunkt der maximalen Federauslenkung darstellen. Bei Betrachtung der Gleichung (1) und (2) wird deutlich, dass $E_{kin,gesamt}$ halb so groß ist wie $E_{kin,start}$, d.h. die kinetische Energie der beiden Läufer ist im Moment der maximalen Federauslenkung halb so groß wie die kinetischen Energie $E_{kin,start}$ zu Beginn der Energieübertragung, wenn die Federauslenkung gleich Null ist.

Die in der Feder gespeicherte potentielle Energie entspricht somit der Energiedifferenz:

$$E_{\text{pot,Feder}} = E_{\text{kin,start}} - E_{\text{kin,gesamt}} = \frac{m}{4} \cdot v_{start}^2.$$

Gemäß einer Ausführungsform kann die Federkonstante der Feder, welche zumindest diese Energiedifferenz speichern kann, durch folgende Gleichung beschrieben werden:

$$D_{\text{Feder}} = \frac{2E_{pot,Feder}}{s_{Auslenkung}^2}$$

wobei $D_{\text{Feder}}$ die Federkonstante der Feder, $E_{\text{pot,Feder}}$ die in der Feder gespeicherte potentielle Energie bei maximaler Federauslenkung darstellen.

Dabei kann $E_{pot,Feder}$ wie folgt bestimmt werden:

$$E_{pot,Feder} = \frac{m}{4} v_{start}^2$$

wobei m die Masse eines Läufers und $v_{start}$ die Geschwindigkeit des ersten Läufers beim Berühren der Feder (d.h. beim Eintritt in den Wirkbereich) ist. Die Federkonstante der Feder kann dem nach der obigen Gleichung berechneten Wert entsprechen oder maximal 15 %, bevorzugt 10 %, besonders bevorzugt 5 %, davon abweichen. Für die Geschwindigkeit $v_{start}$ des Läufers kann eine übliche Geschwindigkeit beim Normalbetrieb des Linearmotorsystems oder eine Maximalgeschwindigkeit (die maximal mit Läufern des Linearmotorsystems erreicht werden kann), angesetzt werden. Bei einer derartigen Auslegung der Federkonstante der Feder kann die Effizienz der Energieübertragung zwischen den Läufern gesteigert werden.

$s_{\text{Auslenkung}}$ kann die Länge der Auslenkungsstrecke der Feder bei maximaler Auslenkung darstellen, wobei die Länge der Auslenkungsstrecke $s_{\text{Auslenkung}}$ durch die Länge der Bremsstrecke des ersten Läufers und der Beschleunigungsstrecke des zweiten Läufers bestimmt wird:

$$V = V_{\text{L1}} = V_{\text{L2}} = \frac{v_{start}}{2}$$

$$S_{\text{L1}} = \frac{V_{start}^2}{2 \cdot a} - \frac{v^2}{2 \cdot a} = \frac{4 \cdot v^2 - v^2}{2 \cdot a} = 3 \cdot \frac{v^2}{2 \cdot a}$$

$$S_{\text{L2}} = \frac{v^2}{2 \cdot a}$$

$$S_{\text{Auslenkung}} = S_{\text{L1}} - S_{\text{L2}} = 3 \cdot \frac{v^2}{2 \cdot a} - \frac{v^2}{2 \cdot a} = 2 \cdot \frac{v^2}{2 \cdot a} = \frac{V_{start}^2}{4 \cdot a}$$

wobei $s_{\text{L1}}$ die zurückgelegte Bremsstrecke des ersten Läufers, $s_{\text{L2}}$ die zurückgelegte Beschleunigungsstrecke des zweiten Läufers und a den Betrag der Beschleunigung des ersten und/oder zweiten Läufers darstellen. Folglich ist die Federauslenkung gleich der Differenz zwischen der zurückgelegten Bremsstrecke des ersten Läufers und der zurückgelegten Beschleunigungsstrecke des zweiten Läufers.

Gemäß einer Ausführungsform kann die Auslenkungsstrecke der Feder bei maximaler Federauslenkung dem Ergebnis gemäß der obigen Formel entsprechen oder maximal 15 %, bevorzugt 10 %, besonders bevorzugt 5 %, davon abweichen. Ist die maximale Auslenkungsstrecke gemäß der obigen Formel berechnet und eingestellt, kann eine optimierte Energieübertragung erreicht werden.

Das Energieübertragungselement kann neben einer Feder auch jedes andere geeignete energieübertragende Element sein. Beispielsweise kann das Energieübertragungselement ein Pneumatikzylinder, ein Hydraulikzylinder, ein Magnet oder eine Kunststoff- / Polymerverbindung sein oder einen solchen / eine solche umfassen.

Beispielsweise können am ersten und zweiten Läufer Magneten gleicher Polung an einer dem ersten bzw.

zweiten Läufer zugewandten Seite befestigt sein. Bewegt sich der erste Läufer auf den zweiten Läufer zu und unterschreitet eine vorbestimmte Distanz zum zweiten Läufer, so kann durch den abstoßenden Effekt der beiden gleichgepolten Magnete der erste Läufer abgebremst und der zweite Läufer beschleunigt werden.

Gemäß einer weiteren Ausführungsform ist das Energieübertragungselement zumindest bereichsweise in dem Läufer versenkbar, an dem das Energieübertragungselement befestigt ist. Beispielsweise umfasst der erste und/oder zweite Läufer Durchbrechungen, die zumindest bereichsweise durch den Läufer hindurch in Fahrtrichtung verlaufen und zur Aufnahme und/oder Befestigung des Energieübertragungselements dienen. Wenn beispielsweise das Energieübertragungselement eine Feder umfasst, so kann bei einer maximalen Kontraktion der Feder die Feder vollständig oder zumindest bereichsweise in der Durchbrechung (z.B. einem Bohrloch) versenkt werden. Insbesondere können die Durchbrechungen an einem serienmäßigen Läufer bereits vorhandene Durchbrechungen sein, sodass ein serienmäßiger Läufer mit einem Energieübertragungselement aus- oder nachgerüstet werden kann.

Zusätzlich oder alternativ kann die Feder ein Stützelement und insbesondere einen Stößel umschließen, umgeben oder umfassen, welcher sich in axialer Richtung durch die Feder hindurch erstreckt, wobei das Stützelement bei einem Kontakt der Feder mit dem ersten und/oder zweiten Läufer bevorzugt in die Durchbrechung des ersten und/oder zweiten Läufers gedrückt werden kann, sodass der Stößel zumindest teilweise in der Durchbrechung versenkt werden kann. Durch den Stößel kann eine erhöhte Stabilität der an dem jeweiligen Läufer befestigten Feder im Vergleich zu einer Feder ohne Stößel bereitgestellt werden.

Gemäß einer weiteren Ausführungsform ist die Summe der Länge einer Bremsstrecke des ersten Läufers und einer Beschleunigungsstrecke des zweiten Läufers mindestens größer oder gleich der Summe der Breite des ersten und zweiten Läufers in Fahrtrichtung. Bei Nichteinhaltung dieser Bedingung kann eine Kollision auftreten. Wenn das Energieübertragungselement und insbesondere die Feder vollständig in dem Läufer versenkbar ist, können sich der erste und zweite Läufer im Moment der maximalen Federauslenkung, d.h. wenn die Addition der Bremsstrecke des ersten Läufers und Beschleunigungsstrecke des zweiten Läufers gleich der Addition der Breite des ersten und zweiten Läufers ist, berühren.

Gemäß einer weiteren Ausführungsform ist das Energieübertragungselement entlang einer Masseschwerpunktgeraden angebracht, die in Fahrtrichtung durch einen Masseschwerpunkt des ersten und/oder zweiten Läufers verläuft. Wenn das Linearmotorsystem eine Mehrzahl von an dem ersten und/oder zweiten Läufer befestigten Energieübertragungselementen aufweist, so können die Energieübertragungselemente achsensymmetrisch zu der Masseschwerpunktgeraden des jeweiligen Läufers angeordnet sein. Die Befestigung des Energieübertragungselements entlang einer Masseschwerpunktgeraden bzw. achsensymmetrisch zur Masseschwerpunktgeraden führt dazu, dass bei einer Übertragung der Energie vom ersten an den zweiten Läufer die Energie gleichmäßig auf den zweiten Läufer übertragen wird, sodass ein ungewünschtes Verrücken oder ein Entkoppeln des Läufers vom Linearmotorsystem verhindert wird.

Ein weiterer Aspekt der Erfindung betrifft ein Verfahren zum Betreiben eines Linearmotorsystems, insbesondere eines Transportsystems, z.B. eines Multi-Carrier-Systems und insbesondere eines Linearmotorsystems nach einem der vorstehenden Ausführungsformen, wobei das Linearmotorsystem umfasst:

eine Führungsbahn mit einer Mehrzahl von entlang der Führungsbahn verteilt angeordneten Elektromagneten;
einen ersten und zweiten Läufer, die von der Führungsbahn geführt und entlang dieser bewegbar sind und jeweils einen Antriebsmagneten zum Zusammenwirken mit den Elektromagneten der Führungsbahn zum Bewegen der Läufer umfassen; und
eine Steuerungseinrichtung zur Steuerung der Bewegung der Läufer relativ zur Führungsbahn durch entsprechende Ansteuerung der Elektromagneten;
wobei das Verfahren umfasst,
dass Energie des ersten Läufers durch ein an dem ersten und/oder zweiten Läufer befestigtes Energieübertragungselement zumindest teilweise an den zweiten Läufer übertragen wird.

Gemäß einer Ausführungsform wird der erste Läufer bei der Übertragung der Energie an den zweiten Läufer abgebremst und der zweite Läufer bei der Übertragung der Energie beschleunigt. Beispielsweise wird der erste Läufer beim Eintritt des ersten und/oder zweiten Läufers in den Wirkbereich durch die Steuerungseinrichtung und durch die Energieübertragung über das Energieübertragungselement an den zweiten Läufer abgebremst, während der zweite Läufer durch die Steuerungseinrichtung und die Energieübertragung über das Energieübertragungselement beschleunigt wird. Dabei hängen die Bremskurve des ersten Läufers und die Beschleunigungskurve des zweiten Läufers insbesondere von der Steuerung und den Eigenschaften des Energieübertragungselements ab. Insbesondere hängt die Bremskurve des ersten Läufers und die Beschleunigungskurve des zweiten Läufers von der Abstimmung der auf die Steuerungseinrichtung zurückzuführenden Brems- bzw. Beschleunigungskurve und der auf das Energieübertragungselement zurückzuführenden Brems- bzw. Beschleunigungskurve ab.

Gemäß einer Ausführungsform beginnt ein Bremsen des ersten Läufers und eine Beschleunigung des zweiten Läufers, wenn sich beide Läufer im Wirkbereich des Energieübertragungselements befinden, und das Bremsen des ersten Läufers und die Beschleunigung des zweiten Läufers endet, wenn beide Läufer den Wirkbereich des Energieübertragungselements verlassen haben. Wenn das Energieübertragungselement eine Feder umfasst (wie vorstehend erläutert) beginnt beispielsweise das Bremsen des ersten Läufers bzw. die Beschleunigung des zweiten Läufers wenn die Feder und der jeweilige Läufer in Kontakt geraten und endet das Bremsen des ersten Läufers bzw. die Beschleunigung des zweiten Läufers, wenn die Feder und der jeweilige Läufer nicht mehr in Kontakt stehen, sodass der Läufer daraufhin mit konstanter Geschwindigkeit auf der Führungsbahn weiterfährt. Beispielsweise kann über Positionssensoren die Position des ersten und zweiten Läufers und somit die Distanz zwischen dem ersten und zweiten Läufer erfasst werden, sodass der Eintritt in den Wirkbereich detektiert wird, sobald eine vorbestimmte Distanz zwischen dem ersten und zweiten Läufer unterschritten wird. Im Anschluss an die Detektion des Eintritts des ersten Läufers in den Wirkbereich kann die Steuerung mittels einer Steuerungsfunktion, die vorab bestimmt wurde und an die auf das Energieübertragungselement zurückzuführende Beschleunigungskurve angepasst ist, das Bremsen des ersten Läufers und Beschleunigung des zweiten Läufers wie oben beschrieben steuern, sodass ein größtmöglicher Wirkungsgrad bei der Energieübertragung sichergestellt wird.

Ein weiterer Aspekt der Erfindung betrifft einen Läufer für ein Linearmotorsystem nach einem der vorstehenden Ausführungsformen, wobei der Läufer einen Antriebsmagneten zum Zusammenwirken mit Elektromagneten einer Führungsbahn des Linearmotorsystems zum Bewegen der Läufer und zumindest ein Energieübertragungselement zur Übertragung von Energie umfasst. Bevorzugt umfasst der Läufer zumindest eine Durchbrechung zur, insbesondere temporären, Aufnahme des Energieübertragungselements, die zumindest bereichsweise durch den Läufer hindurch entlang einer Fahrtrichtung des Läufers verläuft und das Energieübertragungselement in dem Läufer fixiert. Grundsätzlich ist es auch möglich, dass der Läufer eine Mehrzahl von Energieübertragungselementen und Durchbrechungen umfasst. Insbesondere können die Energieübertragungselemente in Fahrtrichtung und/oder entgegen der Fahrtrichtung am Läufer angebracht sein.

Für das Verfahren und den Läufer gelten die Ausführungen zu dem erfindungsgemäßen Linearmotosystem entsprechend, dies gilt insbesondere hinsichtlich Vorteilen und Ausführungsformen.

Nachfolgend wird die Erfindung rein beispielhaft unter Bezugnahme auf die Zeichnungen dargestellt. Es zeigen:

Fig. 1          ein als Transportsystem ausgebildetes Linearmotorsystem,

Fig. 2A bis 2D     die Übertragung von Energie von einem ersten Läufer auf einen zweiten Läufer,

Fig. 3          eine Draufsicht auf das Linearmotorsystem,

Fig. 4          eine durch das Energieübertragungselement bewirkte Beschleunigungskurve und eine durch die Steuerungseinrichtung bewirkte Beschleunigungskurve eines Läufers,

Fig. 5          Beschleunigungsverläufe eines Läufers und entsprechende Stromverläufe, und

Fig. 6A bis 6C     unterschiedliche Ausführungsformen hinsichtlich der Energieübertragungselemente.

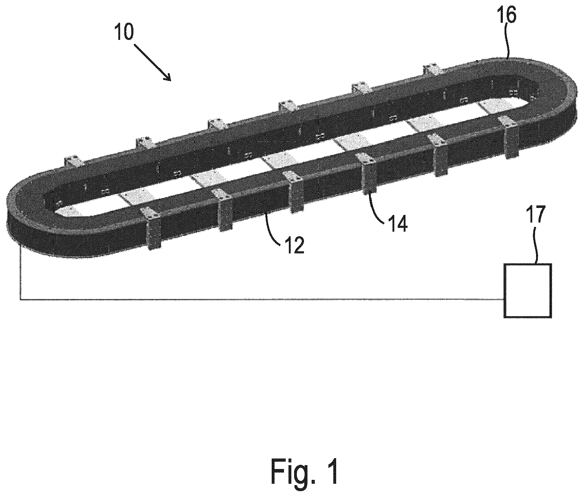

Ein Linearmotorsystem 10, das als Multi-Carrier-System ausgebildet ist, ist in Fig. 1 dargestellt. Das Linearmotorsystem 10 umfasst mehrere Linearmotoren 12, die aneinandergereiht angeordnet sind, sodass eine durchgehende und in diesem Fall umlaufende Bewegung von Läufern 14 entlang einer Führungsbahn 16 ermöglicht ist. Das Transportsystem 10 umfasst mehrere Läufer 14, die einzelne Transportelemente des Transportsystems 10 bilden und die mittels der Linearmotoren 12 entlang der Führungsbahn 16 unabhängig voneinander bewegt werden können. Eine Steuerungseinrichtung 17 steuert dabei die Bewegung der Läufer 14 entlang der Führungsbahn 16.

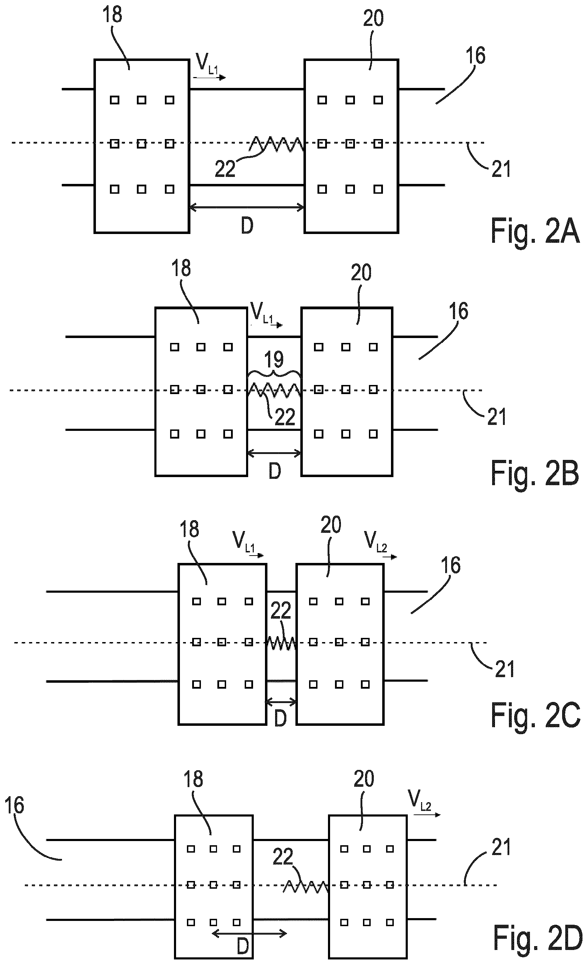

Fig. 2A zeigt eine Frontalansicht eines Abschnitts des Linearmotorsystems 10. Es ist ein erster Läufer 18 sichtbar, der mit einer Geschwindigkeit $v_{L1}$ auf der Führungsbahn 16 geführt wird und sich auf einen zweiten Läufer 20 zubewegt. An dem zweiten Läufer 20 ist entlang einer Masseschwerpunktgeraden 21, die in Fahrtrichtung durch den Masseschwerpunkt verläuft, ein Energieübertragungselement in Form einer Feder 22 befestigt, die in Richtung des ersten Läufers 8 zeigt. Zwischen dem ersten Läufer 18 und dem zweiten Läufer 20 liegt eine Distanz D, die beispielsweise mittels nicht gezeigter Sensoren ermittelt werden kann.

Sobald eine vorbestimmte Distanz zwischen den beiden Läufern 18, 20 von dem ersten Läufer unterschritten wird und somit der erste Läufer 18 in einen Wirkbereich 19 der Feder 22 gelangt bzw. in direkten Kontakt mit der Feder 22 gerät, wie in Fig. 2B dargestellt, beginnt die Steuerungseinrichtung 17 die Bewegung des ersten Läufers 18 abzubremsen und gleichzeitig die Bewegung des zweiten Läufers 20 zu beschleunigen. Die Steuerung der Bewegung des ersten Läufers 18 und/oder der Bewegung des zweiten Läufers 20 ist dabei an eine beispielsweise über ein Iterationsverfahren zuvor ermittelte Beschleunigungskurve angepasst, die auf die Feder 22 unabhängig von der Steuerungseinrichtung 17 zurückzuführen ist.

Durch die Feder 22 wird zumindest ein Teil der kinetischen Energie des ersten Läufers 18 direkt an den zweiten Läufer 20 übertragen und/oder in der Feder 22 als potentielle Energie gespeichert und anschließend als kinetische Energie an den zweiten Läufer 20 übertragen. Somit wird durch die Energieübertragung der erste Läufer 18 abgebremst und der zweite Läufer 20 beschleunigt. Dieser Effekt wird durch die Steuerung der Bewegung des ersten und zweiten Läufers 18, 20 mittels der Steuerungseinrichtung 17 verstärkt. Die Feder 22 wird, wie in Fig. 2C gezeigt, bis zu einem Punkt der maximalen Federauslenkung gestaucht, sodass im maximal gestauchten Zustand der Feder 22 die beiden Läufer 18, 20 eine minimale Distanz voneinander aufweisen. In dem Moment der maximalen Federauslenkung ist in der Feder 22 eine Energie gespeichert, die der halben kinetischen Energie des ersten Läufers 18 kurz bevor oder genau bei Eintritt in den Wirkbereich 19 entspricht. Sobald der Zustand der maximalen Federauslenkung erreicht ist, überträgt die Feder 22 die in der Feder 22 gespeicherte potentielle Energie in Form von kinetischer Energie zumindest teilweise an den ersten und/oder zweiten Läufer 18, 20, sodass der zweite Läufer 20 beschleunigt und der erste Läufer 18 abgebremst wird.

Wie in Fig. 2D zu erkennen ist, wird nach Übertragung der Energie der zweite Läufer 20 mit einer konstanten Geschwindigkeit v auf der Führungsbahn 16 geführt, während der erste Läufer 18 weiterhin abgebremst wird oder sich in Ruhe befindet.

Insbesondere ist die Steuerungseinrichtung 17 dazu eingerichtet, die auf die Feder 22 zurückzuführende Beschleunigungskurve bzw. Bremskurve des zweiten bzw. ersten Läufers 18, 20 zu ermitteln und eine Steuerung der Bewegung des ersten und zweiten Läufers 18, 20 dahingehend anzupassen.

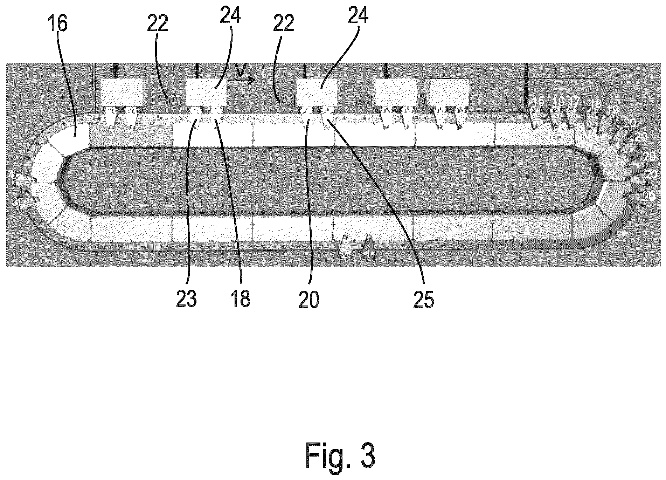

Fig. 3 zeigt eine Draufsicht auf des Linearmotorsystems 10, bei dem Lasten 24 von jeweils zwei Läufern 14 transportiert werden. Der erste Läufer 18 transportiert gemeinsam mit einem dritten Läufer 23 eine Last 24, während der zweite Läufer 20, an dem eine Feder 22 befestigt ist, gemeinsam mit einem vierten Läufer 25 eine weitere Last 24 transportiert. Dabei sind die eine gemeinsame Last transportierenden Läufer 14 lediglich durch die Last 24, welche an den beiden Läufern befestigt ist, verbunden. Alternativ können zwei Läufer 14, die gemeinsam eine Last 24 transportieren, beispielsweise über ein Verbindungselement verbunden werden, sodass die beiden Läufer 14 miteinander verbunden sind. Beispielsweise können die beiden Läufer 14 so verbunden werden, dass die beiden Läufer 14 einen festen Abstand zueinander aufweisen. Der erste und dritte Läufer 18, 23 bewegen sich auf den zweiten und vierten Läufer 20, 25 mit der Geschwindigkeit v zu, wobei der erste und dritte Läufer 18, 23 bei einem Berühren des ersten Läufers 18 und der an dem zweiten Läufer 20 befestigten Feder 22 Energie und insbesondere kinetische Energie über die Feder an den zweiten und vierten Läufer 20, 25 zumindest teilweise übertragen und den zweiten und vierten Läufer 20, 25 beschleunigen, während der erste und dritte Läufer 18, 23 abgebremst werden.

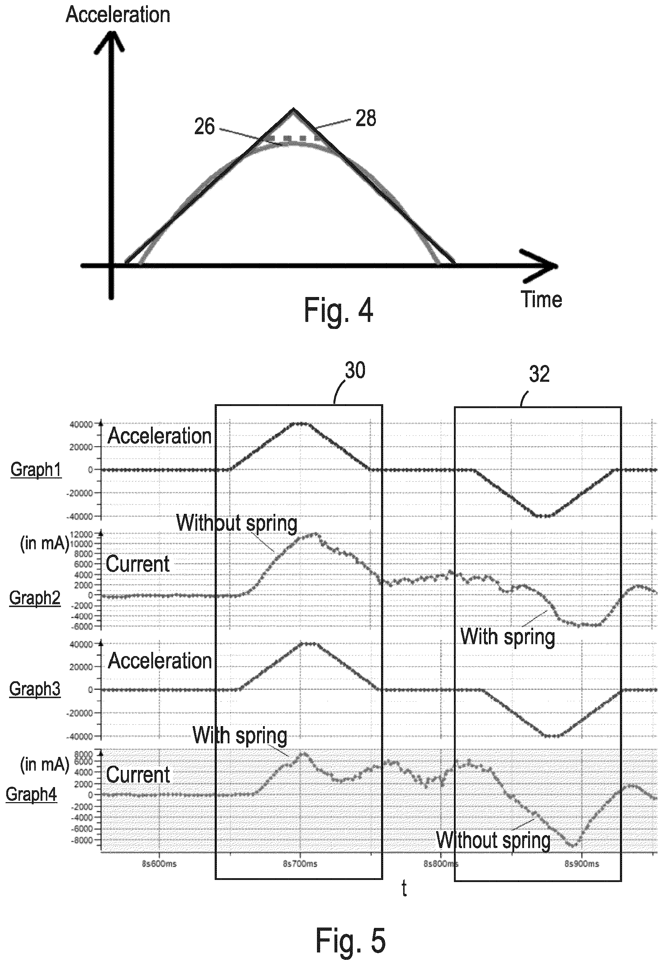

Fig. 4 zeigt zwei Beschleunigungskurven des zweiten Läufers, wobei die erste Beschleunigungskurve 26 auf eine Beschleunigung durch die Feder 22 zurückzuführen ist (d.h. Auftreten würde, wenn nur die Feder 22 bei der Beschleunigung berücksichtigt würde), während die zweite Beschleunigungskurve 28 auf eine Beschleunigung durch die Steuerung bzw. Steuerungseinrichtung 17 zurückzuführen ist (d.h. Auftreten würde, wenn nur die durch die Elektromagneten verursachte und durch die Steuerungseinrichtung 17 gesteuerte Beschleunigung berücksichtigt würde). Die erste Beschleunigungskurve 26, die durch die Feder 22 verursacht wird, weist einen etwa sinusförmigen Verlauf auf und kann beispielsweise bekannt sein, durch ein Iterationsverfahren durch die Steuerungseinrichtung 17 ermittelt und/oder mittels Sensoren gemessen werden. Insbesondere ist die erste Beschleunigungskurve 26 abhängig von den Eigenschaften der Feder 22 sowie von der Geschwindigkeit und Masse des ersten und/oder zweiten Läufers 18, 20. Die zweite Beschleunigungskurve 28 entspricht einer auf den zweiten Läufer 20 wirkenden Beschleunigung durch die Steuerungseinrichtung 17. Wie in Fig. 4 gezeigt, weist die zweite Beschleunigungskurve 28 einen dreiecksförmigen oder trapezförmigen (durch eine gestrichelte Linie angedeuteten) Verlauf auf, um den durch die Feder 22 bewirkten, sinusförmigen Beschleunigungsverlauf möglichst genau nachzubilden und/oder anzunähern. Insbesondere ist die zweite Beschleunigungskurve 28 bzw. die von der Steuerungseinrichtung 17 auf den zweiten Läufer 20 bewirkte Beschleunigung angepasst an die erste Beschleunigungskurve 26. Es ist bevorzugt, dass die durch die Steuerung bewirkte Beschleunigungskurve 28 maximal um 15 oder 10 % von der ersten Beschleunigungskurve 26 abweicht, sodass die Steuerungseinrichtung 17, die durch die Feder 22 bewirkte Beschleunigung des zweiten Läufers 20 unterstützt oder zumindest nicht verringert.

Fig. 5 zeigt einen Beschleunigungsverlauf eines Läufers 14 und einen diesem Beschleunigungsverlauf entsprechenden Stromverlauf. Insbesondere wird der Stromverlauf für einen Beschleunigungsvorgang 30 (links) eines Läufers 14 und für einen Bremsvorgang 32 (rechts) eines Läufers 14 mit dem Einsatz einer Feder 22 als Energieübertragungselement und ohne den Einsatz einer Feder 22 gezeigt. Dabei ist ersichtlich, dass der Stromverlauf (Graph 2 und 4) eines Läufers 14 proportional zum Beschleunigungsverlauf (Graph 1 und 3) ist. Es ist auch ersichtlich, dass für einen Beschleunigungsvorgang 30 eines Läufers 14 mit Feder 22 der benötigte Strom kleiner ist als bei einem Beschleunigungsvorgang 30 ohne Feder 22. Insbesondere wird in Fig. 5 gezeigt, dass der Höchststromwert für eine Beschleunigung eines Läufers 14 mit Feder 22 bei etwa 7 Ampere liegt (siehe Beschleunigungsvorgang Graph 4), während der Höchststromwert für eine Beschleunigung ohne Feder 22 bei 12 Ampere liegt (siehe Beschleunigungsvorgang Graph 2). Es ist außerdem ersichtlich, dass auch beim Bremsvorgang 32 des Läufers 14 mit Feder 22 der benötigte Strom kleiner ist als beim Bremsvorgang 32 ohne Feder 22. Bei einem Bremsvorgang 32 des Läufers 14 mit Feder 22 liegt der Betrag des Höchststromwerts bei etwa 6 Ampere (siehe Bremsvorgang Graph 2), während der Betrag des Höchststromwerts bei einem Bremsvorgang 32 des Läufers 14 ohne Feder 22 bei 9 Ampere liegt (siehe Bremsvorgang Graph 4). Folglich ist der Stromverbrauch eines Linearmotorsystems 10 mit einem Energieübertragungselement wie beispielsweise einer Feder 22 deutlich niedriger als bei einem Linearmotorsystem ohne Feder 22. Durch die niedrigeren Stromwerte können ferner die Anforderungen an das System reduziert werden.

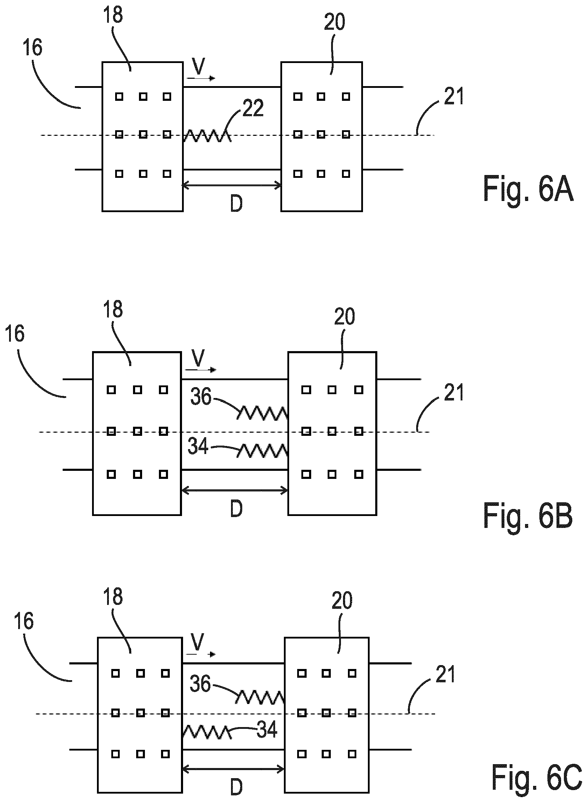

Fig. 6A bis 6C zeigen verschiedene Ausführungsformen des Linearmotorsystems 10. Fig. 6A zeigt einen ersten Läufer 18 und einen zweiten Läufer 20, die auf einer Führungsbahn 16 geführt werden, wobei das Energieübertragungselement bzw. die Feder 22 an dem ersten Läufer 18 angebracht ist.

Fig. 6B zeigt eine Ausführungsform des Linearmotorsystems 10, bei der eine erste Feder 34 und eine zweite Feder 36 an dem zweiten Läufer 20 befestigt sind, wobei die erste Feder 34 und die zweite Feder 36 achsensymmetrisch zu einer Masseschwerpunktgeraden 21 angeordnet sind.

Fig. 6C zeigt eine Ausführungsform des Linearmotorsystems 10, bei der die erste Feder 34 an dem ersten Läufer 18 und die zweite Feder 36 an dem zweiten Läufer 20 befestigt sind, wobei die Federn 34, 36 so angeordnet sind, dass sie während des Kontakts mit einem Läufer 34, 36 achsensymmetrisch zur Masseschwerpunktgeraden 21 der Läufer 34, 36 angeordnet sind.

Bezugszeichenliste

| | |
|---|---|
| 10 | Linearmotorsystem |
| 12 | Linearmotoren |
| 14 | Läufer |
| 16 | Führungsbahn |
| 17 | Steuerungseinrichtung |
| 18 | Erster Läufer |
| 19 | Wirkbereich |
| 20 | Zweiter Läufer |
| 21 | Masseschwerpunktgerade |
| 22 | Feder |
| 23 | dritter Läufer |
| 24 | Last |
| 25 | vierter Läufer |
| 26 | Erste Beschleunigungskurve |
| 28 | Zweite Beschleunigungskurve |
| 30 | Beschleunigungsvorgang |
| 32 | Bremsvorgang |
| 34 | Erste Feder |
| 36 | Zweite Feder |

**Patentansprüche**

1.  Linearmotorsystem (10), insbesondere Transportsystem, z.B. Multi-Carrier-System, umfassend:

    eine Führungsbahn (16) mit einer Mehrzahl von entlang der Führungsbahn (16) verteilt angeordneten Elektromagneten;
    einen ersten und zweiten Läufer (18, 20), die von der Führungsbahn (16) geführt und entlang dieser bewegbar sind und jeweils einen Antriebsmagneten zum Zusammenwirken mit den Elektromagneten der Führungsbahn (16) zum Bewegen der Läufer (18, 20) umfassen;
    eine Steuerungseinrichtung (17) zur Steuerung der Bewegung der Läufer (18, 20) relativ zur Führungsbahn (16) durch entsprechende Ansteuerung der Elektromagneten; und
    zumindest ein an dem ersten und/oder zweiten Läufer (18, 20) befestigtes Energieübertragungselement, das dazu ausgebildet ist, Energie von dem ersten Läufer (18) an den zweiten Läufer (20) zu übertragen.

2.  Linearmotorsystem (10) nach Anspruch 1,

wobei das Energieübertragungselement dazu ausgebildet ist, bei einem Eintritt des ersten und/oder des zweiten Läufers (18, 20) in einen Wirkbereich (19) des Energieübertragungselements die Energie von dem ersten Läufer (18) an den zweiten Läufer (20) zu übertragen.

3. Linearmotorsystem (10) nach Anspruch 2,
wobei die auf die Steuerungseinrichtung (17) zurückzuführende Beschleunigung des zweiten Läufers (20) zumindest im Wirkbereich (19) nicht negativ ist und/oder maximal 15 % oder 10% von der auf das Energieübertragungselement zurückzuführenden Beschleunigung abweicht.

4. Linearmotorsystem (10) nach einem der vorstehenden Ansprüche, wobei die Steuerungseinrichtung (17) dazu eingerichtet ist, die Steuerung der Bewegung des zweiten Läufers (20) an eine durch das Energieübertragungselement bewirkte Beschleunigungskurve des zweiten Läufers (20) anzupassen.

5. Linearmotorsystem (10) nach einem der vorstehenden Ansprüche, wobei die Steuerungseinrichtung (17) dazu eingerichtet ist, die Steuerung der Bewegung des zweiten Läufers (20) so einzustellen, dass eine etwa dreiecksförmige oder trapezförmige Beschleunigungskurve des zweiten Läufers (20) durch die Steuerung erreicht wird.

6. Linearmotorsystem (10) nach einem der Ansprüche 3 bis 5,
wobei mittels eines Iterationsverfahrens ein optimaler Startabstand $d_{opt}$ zwischen dem zweiten Läufer und dem ersten Läufer ermittelt, wobei das Iterationsverfahren umfasst, dass:

(1) ein erster Startabstand $d_1$ zwischen dem ersten und zweiten Läufer festgelegt wird, bei dem sich eine erste minimale Distanz $d_{min,1}$ zwischen den Läufern ergibt, die kleiner ist als eine optimale minimale Distanz $d_{min,opt}$ , wobei der Startabstand eine Distanz zwischen dem ersten und zweiten Läufer definiert, bei dessen Unterschreitung der erste Läufer beginnt zu bremsen und der zweite Läufer beginnt zu beschleunigen;
(2) ein zweiter Startabstand $d_2$ zwischen dem ersten und zweiten Läufer festgelegt wird, bei dem sich eine zweite minimale Distanz $d_{min,2}$ ergibt, die größer ist als eine optimale minimale Distanz $d_{min,opt}$,

$$d_3 = \frac{d1 + d2}{2}$$

(3) ein dritter Startabstand        berechnet und eine entsprechende dritte minimale Distanz $d_{min,3}$ ermittelt wird;
(4) $d_1$ und $d_2$ wie folgt aktualisiert werden:

$$d_1 := d_1 \quad \text{und}$$
$$d_2 := d_3, \quad \text{wenn } (d_{min,1} - d_{min,opt}) \cdot (d_{min,3} - d_{min,opt}) < 0; \text{ oder}$$
$$d_1 := d_3 \quad \text{und}$$
$$d_2 := d_2, \quad \text{wenn } (d_{min,2} - d_{min,opt}) \cdot (d_{min,3} - d_{min,opt}) < 0.$$

(5) die Schritte (3) und (4) wiederholt werden, wenn $d_{min,2} - d_{min,opt}$ > epsilon ist und $d_3$ ungleich 0 ist;
(6) sich der optimale Startabstand $d_{opt}$ wie folgt ergibt:

$$d_{opt} = d2 \quad \text{oder}$$
$$d_{opt} = d3, \quad \text{wenn } d_{min,3} - d_{min,opt} = 0.$$

7. Linearmotorsystem (10) nach einem der vorstehenden Ansprüche, wobei das Energieübertragungselement eine Feder (22) umfasst.

8. Linearmotorsystem (10) nach Anspruch 7,

wobei eine Federkonstante $D_{Feder}$ der Feder (22) dargestellt wird durch die Gleichung:

$$D_{Feder} = \frac{2\,E_{pot,Feder}}{s_{Auslenkung}^2}$$

wobei $D_{Feder}$ die Federkonstante der Feder (22), $s_{Auslenkung}$ die Auslenkungsstrecke der Feder (22) bei maximaler Federauslenkung und $E_{pot,Feder}$ die in der Feder (22) gespeicherte potentielle Energie bei maximaler Federauslenkung darstellen, wobei $E_{pot,Feder}$ wie folgt bestimmt wird:

$$E_{pot,Feder} = \frac{m}{4} \, v_{start}{}^2$$

wobei m die Masse eines Läufers (18, 20) und $v_{start}$ die Geschwindigkeit des ersten Läufers (18) beim Berühren der Feder (22) ist.

9. Linearmotorsystem (10) nach Anspruch 8,

wobei die Auslenkungsstrecke der Feder (22) bei maximaler Federauslenkung $s_{Auslenkung}$ wie folgt bestimmt wird:

$$s_{Auslenkung} = s_{L1} - s_{L2} = \frac{3 \cdot v_{start}{}^2}{8 \cdot a} - \frac{v_{start}{}^2}{8 \cdot a} = \frac{v_{start}{}^2}{4 \cdot a}$$

wobei $s_{L1}$ eine zurückgelegte Bremsstrecke des ersten Läufers (18), $s_{L2}$ eine zurückgelegte Beschleunigungsstrecke des zweiten Läufers (20) und a den Betrag der Beschleunigung des ersten und/oder zweiten Läufers (18, 20) darstellen.

10. Linearmotorsystem (10) nach einem der vorstehenden Ansprüche, wobei das Energieübertragungselement zumindest bereichsweise in dem Läufer (18, 20) versenkbar ist, an dem das Energieübertragungselement befestigt ist.

11. Linearmotorsystem (10) nach einem der vorstehenden Ansprüche, wobei das Energieübertragungselement entlang einer Masseschwerpunktgeraden (21), die in Fahrtrichtung durch einen Masseschwerpunkt des ersten und/oder zweiten Läufers (18, 20) verläuft, angebracht ist.

12. Verfahren zum Betreiben eines Linearmotorsystems (10), insbesondere eines Transportsystems, z.B. eines Multi-Carrier-Systems, insbesondere eines Linearmotorsystems (10) nach einem der vorstehenden Ansprüche, wobei das Linearmotorsystem (10) umfasst:

eine Führungsbahn (16) mit einer Mehrzahl von entlang der Führungsbahn (16) verteilt angeordneten Elektromagneten;
einen ersten und zweiten Läufer (18, 20), die von der Führungsbahn (16) geführt und entlang dieser bewegbar sind und jeweils einen Antriebsmagneten zum Zusammenwirken mit den Elektromagneten der Führungsbahn (16) zum Bewegen der Läufer (18, 20) umfassen; und
eine Steuerungseinrichtung (17) zur Steuerung der Bewegung der Läufer (18, 20) relativ zur Führungsbahn (16) durch entsprechende Ansteuerung der Elektromagneten;
wobei das Verfahren umfasst,
dass eine Energie des ersten Läufers (18) durch ein an dem ersten und/oder zweiten Läufer (18, 20) befestigtes Energieübertragungselement zumindest teilweise an den zweiten Läufer (20) übertragen wird.

13. Verfahren nach Anspruch 12,
wobei der erste Läufer (18) bei der Übertragung der Energie an den zweiten Läufer (20) abgebremst wird und der zweite Läufer (20) bei der Übertragung der kinetischen Energie beschleunigt wird.

14. Verfahren nach einem der Ansprüche 12 bis 13,
wobei ein Bremsen des ersten Läufers (18) und eine Beschleunigung des zweiten Läufers (20) beginnt, wenn sich beide Läufer (18, 20) im Wirkbereich (19) des Energieübertragungselements befinden, und das Bremsen des ersten Läufers (18) und die Beschleunigung des zweiten Läufers (20) endet, wenn beide Läufer (18, 20) den Wirkbereich (19) des Energieübertragungselements verlassen haben.

15. Läufer (18, 20) für ein Linearmotorsystem (10) nach einem der Ansprüche 1 bis 11, umfassend:

einen Antriebsmagneten zum Zusammenwirken mit Elektromagneten einer Führungsbahn (16) des Linearmotorsystems (10) zum Bewegen der Läufer (18, 20); und

zumindest ein Energieübertragungselement zur Übertragung von kinetischer Energie.

Fig. 1

18    $V_{L1}$    20    16

22    21

Fig. 2A

18    $V_{L1}$    20    16

19    22    21

Fig. 2B

18    $V_{L1}$    20    $V_{L2}$    16

22    21

Fig. 2C

16    18    20    $V_{L2}$

22    21

D

Fig. 2D

Fig. 3

Fig. 4

Fig. 5

Fig. 6A

Fig. 6B

Fig. 6C

Europäisches
Patentamt

European
Patent Office

Office européen
des brevets

# EUROPÄISCHER RECHERCHENBERICHT

Nummer der Anmeldung

EP 21 30 6425

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 334 523 B1 (FUKUNAGA SHIGEKI [JP]) 1. Januar 2002 (2002-01-01) * Spalte 4 - Spalte 8; Abbildungen 1-10 * ----- | 1-9, 11-15 | INV. B65G54/02 H02K41/03 B60L13/03 |
| X | DE 10 2013 202674 A1 (BOSCH GMBH ROBERT [DE]) 21. August 2014 (2014-08-21) * Absatz [0017] - Absatz [0032]; Abbildungen 1-11 * ----- | 1-3, 5-10,12, 13 | |
| X | WO 2015/036196 A2 (KRONES AG [DE]) 19. März 2015 (2015-03-19) * Absatz [0111] - Absatz [0120]; Abbildungen 1-8 * ----- | 1-3,5,6, 12,13 | |
| X | WO 2019/007198 A1 (SHANGHAI GOLYTEC AUTOMATION CO LTD [CN]) 10. Januar 2019 (2019-01-10) * Seite 10, Zeile 19 - Seite 11, Zeile 5; Abbildungen 1-10 * ----- | 1-3,5,6, 11-13 | RECHERCHIERTE SACHGEBIETE (IPC) |
| X | WO 2010/099610 A1 (AUTOMATION TOOLING SYST [CA]; STAUNTON DARRAGH [DE] ET AL.) 10. September 2010 (2010-09-10) * Absatz [0054] - Absatz [00108]; Abbildungen 1-14 * ----- | 1-3,5,6, 12,13 | B65G H02K B60L |

Der vorliegende Recherchenbericht wurde für alle Patentansprüche erstellt

| Recherchenort | Abschlußdatum der Recherche | Prüfer |
|---|---|---|
| Den Haag | 7. März 2022 | Scheller, Johannes |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 30 6425

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2022

| Im Recherchenbericht angeführtes Patentdokument | Datum der Veröffentlichung | Mitglied(er) der Patentfamilie | Datum der Veröffentlichung |
|---|---|---|---|
| US 6334523 B1 | 01-01-2002 | JP 3367464 B2<br>JP 2000317870 A<br>US 6334523 B1 | 14-01-2003<br>21-11-2000<br>01-01-2002 |
| DE 102013202674 A1 | 21-08-2014 | KEINE | |
| WO 2015036196 A2 | 19-03-2015 | CN 105722771 A<br>DE 102013218391 A1<br>EP 3044133 A2<br>EP 3354602 A2<br>EP 3354603 A1<br>US 2016207717 A1<br>WO 2015036196 A2 | 29-06-2016<br>19-03-2015<br>20-07-2016<br>01-08-2018<br>01-08-2018<br>21-07-2016<br>19-03-2015 |
| WO 2019007198 A1 | 10-01-2019 | CN 108328249 A<br>WO 2019007198 A1 | 27-07-2018<br>10-01-2019 |
| WO 2010099610 A1 | 10-09-2010 | CA 2753898 A1<br>CA 2754560 A1<br>CA 3030712 A1<br>EP 2403784 A1<br>EP 2403785 A1<br>KR 20120001744 A<br>KR 20120001745 A<br>KR 20180033605 A<br>TW 201036891 A<br>TW 201036896 A<br>US 2010276255 A1<br>US 2010276256 A1<br>US 2013180824 A1<br>WO 2010099610 A1<br>WO 2010099611 A1 | 10-09-2010<br>10-09-2010<br>10-09-2010<br>11-01-2012<br>11-01-2012<br>04-01-2012<br>04-01-2012<br>03-04-2018<br>16-10-2010<br>16-10-2010<br>04-11-2010<br>04-11-2010<br>18-07-2013<br>10-09-2010<br>10-09-2010 |

EPO FORM P0461

Für nähere Einzelheiten zu diesem Anhang : siehe Amtsblatt des Europäischen Patentamts, Nr.12/82